# EUROPÄISCHE PATENTSCHRIFT

(11) **EP 0 944 778 B1**
(45) Veröffentlichungstag und Bekanntmachung des Hinweises auf die Patenterteilung: **21.08.2002**
(21) Anmeldenummer: 97952823.9
(22) Anmeldetag: 28.11.1997
(51) Int. Cl.: F16D 55/2265

(54) **BOLZENFÜHRUNG FÜR EINE SCHWIMMSATTEL-TEILBELAGSCHEIBENBREMSE**
BOLT GUIDE FOR THE FLOATING CALLIPER OF A PARTIALLY LINED DISC BRAKE
GUIDE DE BOULON POUR FREIN A DISQUE A GARNITURE PARTIELLE A ETRIER FLOTTANT

(30) Priorität: 19.12.1996 DE 19653029
(43) Veröffentlichungstag der Anmeldung: 29.09.1999
(73) Patentinhaber: Continental Teves AG & Co. oHG, 60488 Frankfurt (DE)
(72) Erfinder: WINTER, Klaus, D-65760 Eschborn (DE)
(74) Vertreter: Portwich, Peter
(86) Internationale Anmeldenummer: EP9706656
(87) Internationale Veröffentlichungsnummer: WO98027354

(56) Entgegenhaltungen:
- WO-A-90/10162
- WO-A-95/10712
- DE-A- 3 141 598
- GB-A- 2 145 787
- GB-A- 2 225 070

## Beschreibung

Die Erfindung betrifft ein Führungselement für eine Schwimmsattel-Teilbelagscheibenbremse gemäß dem Oberbegriff der Patentansprüche 1 bzw. 3, bei der ein Schwimmsattel axial verschiebbar zu einem Bremsträger gelagerbar ist.

Aus der DE 42 03 318 A1 ist eine Schwimmsattel-Scheibenbremse bekannt mit einem Bremsträger sowie einem den Rand der Bremsscheibe und beiderseits der Bremsscheibe angeordnete Bremsbacken umgreifenden Bremssattel. Am Bremsträger sind zwei in Sekantenrichtung der Bremsscheibe beabstandete Führungsbolzen eingeschraubt, die sich mit ihrem Führungsabschnitt axial erstrecken und innerhalb von Bohrungen im Bremssattel axial verschiebbar geführt sind. Zusätzlich ist der Einsatz einer elastomeren Führungshülse zwischen Führungsbolzen und der Bohrung im Bremssattel vorgesehen. Zur Einhaltung der Korrosionsbeständigkeit und der lösbaren Verbindung des Führungsbolzens am Bremsträger, ist jeder Führungsbolzen aus hochwertigem, rostfreiem Stahl hergestellt. Weiterhin sind die beiden Führungsbolzen aus Festigkeitsgründen massiv ausgebildet.

Die DE 42 36 075 A1 beschreibt ferner eine Schwimmsattel-Teilbelagscheibenbremse mit einem integrierten Bremsträger, wobei der Schwimmsattel über zwei unterschiedlich ausgeführte Bolzenführungen axial verschiebbar am integrierten Bremsträger gelagert ist. Eine der Bolzenführungen ist bekannterweise massiv ausgeführt und am Bremsträger verschraubt. Die andere Bolzenführung, die im wesentlichen zur Übertragung eines Großteiles der Bremsumfangskräfte dient, besteht aus einer Führungshülse sowie einer Befestigungsschraube. Dabei umgibt die Führungshülse die Befestigungsschraube und wird von dieser mit dem Bremsträger verspannt. Der Aufbau einer derartigen Bolzenführung ist sehr aufwendig und aufgrund der Übertragung der Bremsumfangskräfte über im wesentlichen nur eine der beiden Bolzenführungen sehr massiv ausgeführt. Desweiteren sind für alle bekannten Führungsbolzen massiver Bauart kostspielige, nicht rostende Werkstoffe erforderlich.

Aus der WO 95/10712 ist schließlich eine Bolzenführung für einen Schwimmsattel bekannt, bei der am Schwimmsattel befestigte hohle Führungshülsen jeweils verschiebbar in einer Bohrung eines fahrzeugfesten Bremshalters gelagert sind. Zur Befestigung der Führungshülsen weist der Schwimmsattel seitliche Durchgangsöffnungen auf, durch die jeweils eine separate Befestigungsschraube in die Führungshülse eingeschraubt ist. Dadurch wird die Führungshülse zusammen mit der Befestigungsschraube am Schwimmsattel gehalten. Zwar wird die Bolzenführung hier durch die Verwendung der Führungshülse bereits teilweise gewichtssparend ausgebildet, allerdings wird dieser Gewichtsvorteil durch die Notwendigkeit massiver Befestigungsschrauben wieder relativiert. Ferner ist im Sinne eines unerwünscht hohen Bauteilaufwandes wenigstens ein zusätzliches Befestigungselement zur Befestigung der Bolzenführung erforderlich.

Die Aufgabe der Erfindung besteht darin, bestehende Führungselemente von Schwimmsattel-Teilbelagscheibenbremsen auf einfache und kostengünstige Weise hinsichtlich ihres Gewichtes zu verbessern.

Die Lösung der Aufgabe wird im wesentlichen erreicht durch die Merkmalskombination der Patentansprüche 1 bzw. 3. Dabei ist das Führungselement, das für die axial verschiebbare Lagerung des Schwimmsattels relativ zum Bremsträger verantwortlich ist, mit einem ersten Ende am Bremsträger bzw. am Schwimmsattel lösbar befestigbar und ist mit einem zweiten Ende innerhalb einer Öffnung des jeweils anderen Bremsenbauteiles axial verschiebbar aufnehmbar. Dabei ist das zweite Ende des Führungselementes als rohrförmige, hohle Führungshülse ausgebildet.

Die Verwendung einer hohlen Führungshülse ermöglicht damit gegenüber bekannten, massiven Führungsbolzen eine erhebliche Gewichtsersparnis.

Das Führungselement wird von einer einteiligen, rohrförmigen Hülse gebildet, die selbst über ein Außengewinde an einem Hülsenende am Bremsträger bzw. Schwimmsattel verschraubbar ist. Es ist dabei erforderlich, das einteilige Führungselement aus nichtrostendem Stahl bzw. korrosionsbeständigem Werkstoff herzustellen. Idealerweise besitzt das Führungselement einen axialen Absatz, der als Anschlagfläche für die Verschraubung dient, sowie eine Aufnahme, insbesondere einen Innen- oder Außensechskant, zum Ansetzen eines Verschraubungswerkzeuges. Hierbei erweist es sich als günstig, die Werkzeugaufnahme (Innen-/Außensechskant) an dem dem verschraubten Ende gegenüberliegenden freien Ende anzuformen, wobei die Führungshülse zusätzlich noch umgebördelt ist. Durch die Umbördelung ist die Führungshülse an ihrem freien Ende im Abschnitt der Werkzeugaufnahme zur Versteifung zweilagig ausgeführt.

In einer bevorzugten Variante der Erfindung ist die einteilige Hülse an ihrem verschraubten Ende topfartig, geschlossen ausgebildet, um das Eindringen von Schutz in das Hülseninnere bzw. die Bolzenführung zuvermeiden.

Die Ausgestaltung der Hülse erfolgt insbesondere ausgehend von einem einfachen, rohen Rohrabschnitt durch einen Blechumformvorgang. Bei Herstellung der Hülse aus einem einfachen Blech (z. B. einem Blechtopf) wird ein Tiefziehverfahren vorteilhaft angewendet. Weiterhin ist aber auch die Herstellung der Führungshülse durch ein Fließpreßverfahren möglich.

Ausführungsbeispiele werden anhand der Zeichnung dargestellt und im folgenden näher erläutert.

Es zeigen:
- Fig. 1: eine Schnittdarstellung einer aus dem Stand der Technik bekannten zweiteiligen Bolzenführung mit Führungshülse und Befestigungsschraube,
- Fig. 2: eine Schnittdarstellung einer einteiligen Führungshülse, die im Fließpreßverfahren hergestellt wurde.
- Fig. 3-4: zwei weitere Varianten einer einteiligen Führungshülse, die aus einem Blechzuschnitt gefertigt sind.

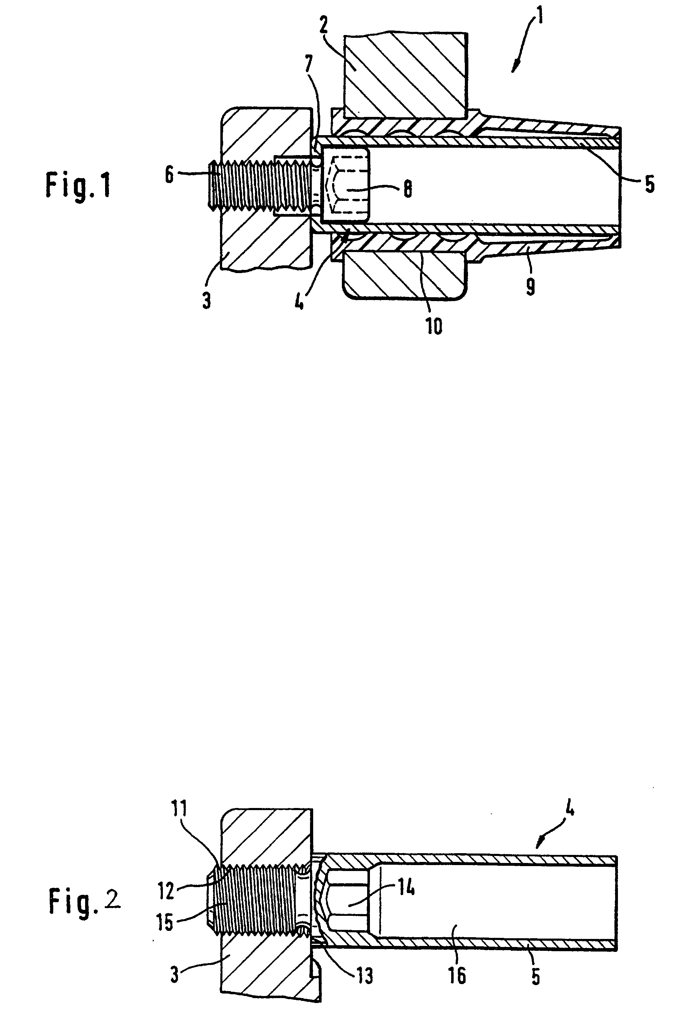

In Fig. 1 ist eine aus dem Stand der Technik bekannte Bolzenführung 1 insbesondere für eine Schwimmsattel-Teilbelagscheibenbremse dargestellt, die zur axial verschiebbaren Lagerung eines Schwimmsattels 2 relativ zum Bremsträger 3 dient. Die Bolzenführung 1 weist ein Führungselement 4 auf, daß aus einer rohrförmigen Führungshülse 5 sowie einer Befestigungsschraube 6 besteht. Dabei besitzt die Führungshülse 5 an ihrem dem Bremsträger zugewandten Ende einen abgewinkelten Kragen 7, der eine ringförmige Anlagefläche zum Bremsträger 3 ausbildet. Die Befestigungsschraube 6 verspannt mit ihrem innerhalb der Führungshülse 5 angeordneten Schraubenkopf 8 den abgewinkelten Kragen 7 der Führungshülse 5 mit dem Bremsträger 3, wodurch das zweiteilige Führungselement 4 lösbar am Bremsträger fixiert ist. Die in axialer Richtung sich erstreckende Führungshülse 5 ist über eine Gleithülse 9 aus elastomerem Material innerhalb einer Führungsbohrung 10 des Schwimmsattels 2 angeordnet. Es ergibt sich damit eine leichtgängige Führung des Schwimmsattels 2 am Bremsträger 3. Selbstverständlich läßt sich auch umgekehrt das Führungselement 4 am Schwimmsattel 2 befestigen und axial verschiebbar innerhalb einer Bohrung des Bremsträger 3 führen.

Aus Korrosionsgründen sowie zur Verbesserung der Gleiteigenschaften ist die rohrförmige Führungshülse 5 aus einem nichtrostenden bzw. korrosionsbeständigen Werkstoff hergestellt, wobei der abgewinkelte Kragen 7 insbesondere durch eine Blechumformung erzeugt wird. Durch Verwendung einer einfachen, genormten Schraube als Befestigungsschraube 6 für die Führungshülse 5 ergibt sich eine hinsichtlich der anfallenden Kosten verbesserte Lösung. Hierbei erweist sich der Einsatz einer Schraube mit Innensechskant im Schraubenkopf 8 als besonders vorteilhaft. Zur Verbesserung der Korrosionsbeständigkeit der Befestigungsschraube 6 und damit leichteren Lösbarkeit, kann die Befestigungsschraube 6 ergänzend mit einer korrosionshemmenden Oberflächenbehandlung versehen sein (z.B. Verzinken).

In den Fig. 2 - 4 sind Varianten eines einteiligen Führungselementes 4 gezeigt. Dabei besitzt die Führungshülse 5 an ihrem dem Bremsträger 3 zugewandten Ende ein Außengewinde 11 und ist damit innerhalb einer Gewindebohrung 12 des Bremsträger verschraubt. Die einteilige Führungshülse 5 besitzt einen axialen Absatz 13 als Anschlagfläche für die Verschraubung am Bremsträger 3. Des weiteren besitzt die Führungshülse 5 insbesondere an ihrer Innenkontur eine Aufnahme 14 für ein Werkzeug zur Verschraubung der Führungshülse 5 am Bremsträger 3. In den Ausführungen der Führungshülse 5 nach den Fig. 2-4 ist die Werkzeugaufnahme 14 als Innensechskant-Kontur an dem dem Bremsträger 3 zugewandten Ende der Führungshülse 5 ausgebildet. Je nach Anwendungsfall kann die Werkzeugaufnahme 14 dabei entweder axial von innen oder aber axial von außen zugänglich sein. In analoger Weise kann selbstverständlich die Werkzeugaufnahme 14 auch an dem dem Bremsträger 3 abgewandten Ende der Führungshülse 5 ausgeführt werden. Es ist in vorteilhafter Weise sowohl die Ausführung einer Innensechskant- als auch einer Außensechskant-Kontur an der Führungshülse 5 möglich. Es ergibt sich damit in einfacher Weise die Verwendung handelsüblicher Verschraubungswerkzeuge.

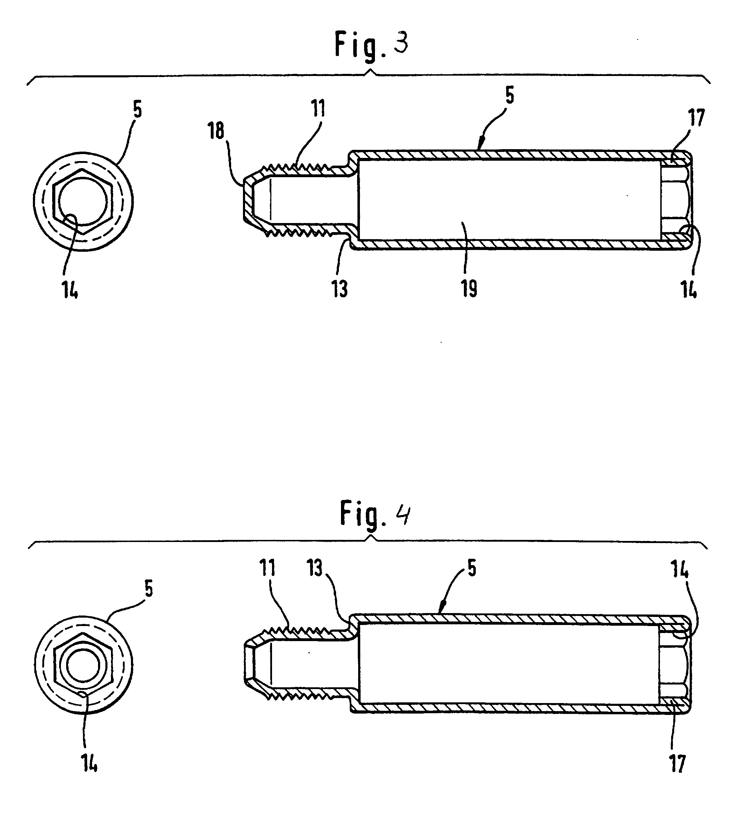

Die Ausbildung des axialen Absatzes 13 der Werkzeugaufnahme 14 sowie des Außengewindes 11 an der Führungshülse erfolgt vorteilhafterweise durch Umformung eines rohrförmigen, rohen Hülsenabschnittes, der bevorzugt aus einem nichtrostenden bzw. korrosionsbeständigen Wekstoff besteht (insbesondere rostfreier Stahl). Für die Anwendung einer einteiligen, durchgehend hohlen Führungshülse 5 nach Fig. 4 ergibt sich damit das höchste Potential an Gewichtsersparnis gegenüber bekannten massiven Führungsbolzen.

Fig. 2 ist eine weitere Variante eines einteiligen Führungselementes 4 zu entnehmen, das nur im Bereich des Führungsabschnittes teilweise als Hohlbauteil ausgeführt ist. Der im Bremsträger 3 verschraubte Gewindezapfen 15 der einteiligen Führungshülse 5 besteht aus Vollmaterial und der sich axial erstreckende Führungsabschnitt 16 besitzt einen Hohlquerschnitt. Die in Form eines Innensechskants ausgeführte Werkzeugaufnahme 14 ist axial von der Innenseite her durch die hohle Führungshülse 5 hindurch erreichbar. Ein einteiliges Führungselement 4 gemäß Fig. 2 ist als Fließpreßteil hergestellt. Gegenüber der Variante aus Fig. 4 ergibt sich infolge des massiven Gewindezapfens 15 eine geringfügig reduzierte Gewichtersparnis.

Aus den Figuren 3 und 4 sind zwei weitere Ausführungsformen einer einteiligen, hohlen Hülse zu entnehmen, die aus einem einfachen Blechzuschnitt, beispielsweise einem Rohrabschnitt oder einem sonstigen Blech, gefertigt sind. Analog zur bereits beschriebenen Variante in Figur 2 sind die Hülsen aus den Figuren 3-4 an einem ersten Ende mit einem Außengewinde 11 versehen, zu Verschraubung in einem nicht gezeigten Bremsträger oder Schwimmsattel. Mit dem dazu gegenüberliegenden Ende ist die Hulse mittels einer Führungshülse 5 in bekannter Weise axial verschiebbar in einer entsprechenden Bohrung des Schwimmsattels bzw. des Bremsträgers gelagert. Im Unterschied zu der bereits erläuterten Variante besitzen die Führungshülsen 5 aus den Figuren 3 und 4 die Werkzeugaufnahme 14 in Gestalt eines Innensechskants an dem dem Außengewinde 11 gegenüberliegenden Hülsenende. Hierbei ist das betreffende, insbesondere dem Bremsträger abgewandte Ende mit einem umgelegten Blechabschnitt 17 versehen, wodurch die Führungshülse 5 im Bereich der Werkzeugaufnahme 14 zweilagig ausgeführt ist. Vorzugsweise ist der umgelegte Blechabschnitt 17 umgebördelt, kann aber ebenso auch durch eine andere Blechumformung entsprechend gestaltet werden. Damit besitzt die Führungshülse eine erhöhte Standfestigkeit gegenüber den bei der Verschraubung der Hülse auftretenden Kräfte. Selbstverständlich ist die Ausbildung der Werkzeugaufnahme 14 nicht auf die in den Figuren 3-4 gezeigte Ausführung als Innensechskant beschränkt. Es ist grundsätzlich jede Kontur der Werkzeugaufnahme möglich, die das axiale Verdrehen der Hülse unter Zuhilfenahme eines Verschraubungswerkzeuges erlaubt und gleichzeitig möglichst einfach anzuformen ist.

Die Hülsen aus den Figuren 3-4 sind durch ein Tiefziehverfahren aus einem Blechzuschnitt, z. B. einem Rohrabschnitt oder einem sonstigen Blech, gefertigt.

Die in Figur 3 abgebildete Hülse besitzt an ihrem im Bremsträger bzw. Schwimmsattel verschraubten Ende einen topförmig geschlossenen Abschnitt 18, wodurch das Eindringen von Schmutz in das Hülseninnere 19 oder auch allgemein in die Bolzenführung erfolgreich verhindert wird. Die Beeinträchtigung der Qualität der Bolzenführung bzw. die Entstehung von Korrosionsprodukten kann durch den geschlossenen Abschnitt 18 vermieden werden. Die Hülsenausführung mit geschlossenem Abschnitt 18 nach Fig. 3 setzt jedoch voraus, daß die einteilige Hülse aus einem beispielsweise topfförmigen Blechzuschnitt etwa durch ein Tiefziehverfahren oder ein analoges Blechumformverfahren hergestellt wurde.

Im Unterschied dazu ist die Hülse aus Figur 4 mit einer durchgehenden Öffnung versehen, wodurch sie unter Verwendung eines einfachen Rohrabschnittes durch Blechumformung fertigungstechnisch günstig herstellen läßt.

## Patentansprüche

1. Führungselement (4) für eine Schwimmsattel-Teilbelagscheibenbremse, die einen Bremsträger (3) sowie einen axial verschiebbar dazu gelagerten Schwimmsattel (2) besitzt, bestehend aus nichtrostendem bzw. aus korrosionsbeständigem Werkstoff, wobei das Führungselement (4) mit einem ersten Ende am Bremsträger (3) bzw. Schwimmsattel (2) lösbar befestigbar ist, mit einem zweiten Ende, das als eine rohrförmige Führungshülse (5) ausgebildet ist, innerhalb einer Öffnung (10) des jeweils anderen Bremsenbauteiles Schwimmsattel (2) bzw. Bremsträger (3) axial verschiebbar lagerbar ist und eine Aufnahme (14) zum Ansetzen eines Verschraubungswerkzeuges aufweist, **dadurch gekennzeichnet, daß** das einteilige Führungselement (4) durch ein Tiefziehverfahren aus einem Blechteil hergestellt ist und über ein Außengewinde an seinem ersten Ende am Bremsträger (3) bzw. Schwimmsattel (2) verschraubbar ist, wobei die Führungshülse (5) im Bereich der Aufnahme (14) durch einen umgelegten Blechabschnitt (17) zweilagig ausgebildet ist.

2. Führungselement (4) nach Anspruch 1, **dadurch gekennzeichnet, daß** das Führungselement (4) von einer einteiligen, rohrförmigen Hülse gebildet wird, die an ihrem mit dem Bremsträger (3) bzw. Schwimmsattel (2) verschraubbaren Ende einen topfartig, geschlossen Abschnitt (18) aufweist.

3. Führungselement (4) für eine Schwimmsattel-Teilbelagscheibenbremse, die einen Bremsträger (3) sowie einen axial verschiebbar dazu gelagerten Schwimmsattel (2) besitzt, bestehend aus nichtrostendem bzw. aus korrosionsbeständigem Werkstoff, wobei das Führungselement (4) mit einem ersten Ende am Bremsträger (3) bzw. Schwimmsattel (2) lösbar befestigbar ist und mit einem zweiten Ende, das als eine rohrförmige Führungshülse (5) ausgebildet ist, innerhalb einer Öffnung (10) des jeweils anderen Bremsenbauteiles Schwimmsattel (2) bzw. Bremsträger (3) axial verschiebbar lagerbar ist, **dadurch gekennzeichnet, daß** das einteilige Führungselement (4) durch ein Fließpreßverfahren hergestellt ist, über ein an einem Gewindezapfen (15) aus Vollmaterial ausgebildetes Außengewinde an seinem ersten Ende am Bremsträger (3) bzw. Schwimmsattel (2) verschraubbar ist und eine Aufnahme (14) zum Ansetzen eines Verschraubungswerkzeuges aufweist, wobei die Aufnahme (14) durch die hohle Führungshülse hindurch erreichbar ist.

## Claims

1. Guide element (4), in particular for a floating-caliper spot-type disc brake, which includes a brake support member (3) and a floating caliper (2) that is axially slidably mounted in relation thereto, made of a rustproof or non-corrosive material, wherein the guide element (4), with a first end, is adapted to be detachably fastened to the brake support member (3) or the floating caliper (2) and, with a second end that is configured as a tubular guide sleeve (5), is adapted to be axially slidably mounted inside an opening (10) of the respectively other brake component, i.e., floating caliper (2) or brake support member (3), and includes a holding fixture (14) for application of a screwing tool,
**characterized in that** the one-part guide element (4) is made from a sheet-metal part in a deepdrawing process and, by way of an external thread at its first end, is adapted to be screwed to the brake support member (3) or the floating caliper (2), and the guide sleeve (5) has a two-layer design made up of a laid-over sheet-metal portion (17) in the area of the holding fixture (14).

2. Guide element (4) as claimed in claim 1,
**characterized in that** the guide element (4) is a one-part tubular sleeve which has a bowl-type closed portion (18) at its end that is adapted to be screwed to the brake support member (3) or the floating caliper (2).

3. Guide element (4) for a floating-caliper spot-type disc brake, which includes a brake support member (3) and a floating caliper (2) that is axially slidably mounted in relation thereto, made of a rustproof or non-corrosive material, wherein the guide element (4), with a first end, is adapted to be detachably fastened to the brake support member (3) or the floating caliper (2) and, with a second end that is configured as a tubular guide sleeve (5), is adapted to be axially slidably mounted inside an opening (10) of the respectively other brake component, i.e., floating caliper (2) or brake support member (3), **characterized in that** the one-part guide element (4) is made by extrusion and, at its first end, is adapted to be screwed to the brake support member (3) or the floating caliper (2) by way of an external thread at a threaded plug (15) made of solid material, and includes a holding fixture (14) for application of a screwing tool, the said holding fixture (14) being accessible through the hollow guide sleeve.

## Revendications

1. Elément de guidage (4) pour un frein à disque à garnitures partielles et à étrier flottant, qui comprend un support de frein (3) et, monté sur celui-ci de façon à pouvoir être déplacé en translation axiale, un étrier flottant (2), en étant constitué d'une matière ne rouillant pas ou résistant à la corrosion, tandis que l'élément de guidage (4) peut être fixé d'une manière séparable, à une première extrémité, sur le support de frein (3) ou l'étrier flottant (2), peut être monté de façon à pouvoir être déplacé en translation axiale, par une seconde extrémité qui est réalisée sous forme d'un manchon de guidage (5) tubulaire, à l'intérieur d'une ouverture (10) de l'autre pièce de frein qu'est l'étrier flottant (2) ou le support de frein (3), et comporte une partie réceptrice (14) pour l'application d'un outil de vissage, **caractérisé en ce que** l'élément de guidage (4) d'une seule pièce est réalisé à partir d'un morceau de tôle au moyen d'un procédé d'emboutissage et peut être vissé, par un filetage extérieur situé à sa première extrémité, respectivement sur le support de frein (3) ou l'étrier flottant (2), le manchon de guidage (5) étant réalisé avec une double épaisseur dans la zone de la partie réceptrice (14) au moyen d'un segment de tôle (17) replié.

2. Elément de guidage (4) suivant la revendication 1, **caractérisé en ce que** l'élément de guidage (4) est formé d'un manchon tubulaire d'une seule pièce qui comporte un segment en forme de gobelet et fermé (18) à son extrémité pouvant être vissée respectivement sur le support de frein (3) ou l'étrier flottant (2).

3. Elément de guidage (4) pour un frein à disque à garnitures partielles et à étrier flottant, qui comprend un support de frein (3) et, monté sur celui-ci de façon à pouvoir être déplacé en translation axiale, un étrier flottant (2), en étant constitué d'une matière ne rouillant pas ou résistant à la corrosion, tandis que l'élément de guidage (4) peut être fixé d'une manière séparable, à une première extrémité, sur le support de frein (3) ou l'étrier flottant (2), et peut être monté de façon à pouvoir être déplacé en translation axiale, par une seconde extrémité qui est réalisée sous forme d'un manchon de guidage (5) tubulaire, à l'intérieur d'une ouverture (10) de l'autre pièce de frein qu'est l'étrier flottant (2) ou le support de frein (3), **caractérisé en ce que** l'élément de guidage (4) d'une seule pièce est réalisé au moyen d'un procédé de formage par fluage, peut être vissé sur respectivement le support de frein (3) ou l'étrier flottant (2) par un filetage extérieur situé à sa première extrémité et réalisé sur un embout fileté (15) en matière pleine et comporte une partie réceptrice (14) pour l'application d'un outil de vissage, la partie réceptrice (14) pouvant être atteinte en traversant le manchon de guidage creux.
